# EUROPÄISCHE PATENTSCHRIFT

(11) **EP 4 208 648 B1**
(45) Veröffentlichungstag und Bekanntmachung des Hinweises auf die Patenterteilung: **27.12.2023**
(21) Anmeldenummer: 21787349.6
(22) Anmeldetag: 01.10.2021
(51) Int. Cl.: F16B 11/00, F16B 37/06, F16B 17/00

(54) **BAUTEILVERBUND MIT EINEM FUNKTIONSBAUTEIL UND VERFAHREN ZUM FESTLEGEN EINES FUNKTIONSBAUTEILS AN EINEM HALTEBAUTEIL**
COMPONENT ASSEMBLY COMPRISING A FUNCTIONAL COMPONENT, AND METHOD FOR SECURING A FUNCTIONAL COMPONENT TO A HOLDING COMPONENT
ENSEMBLE DE COMPOSANTS COMPRENANT UN COMPOSANT FONCTIONNEL ET PROCÉDÉ DE FIXATION D'UN COMPOSANT FONCTIONNEL À UN COMPOSANT DE RETENUE

(30) Priorität: 03.12.2020 DE 102020132184
(43) Veröffentlichungstag der Anmeldung: 12.07.2023
(73) Patentinhaber: Audi AG, 85045 Ingolstadt (DE)
(72) Erfinder: BRASSEL, Jan-Oliver, 74177 Bad Friedrichshall (DE); RINTELMANN, Jochen, 06844 Dessau (DE); SPINDLER, Jörg, 74239 Hardthausen a.K. (DE)
(86) Internationale Anmeldenummer: PCT/EP2021/077118
(87) Internationale Veröffentlichungsnummer: WO 2022/117245

(56) Entgegenhaltungen:
- EP-A1- 1 717 460
- DE-A1-102009 032 083
- US-A- 4 729 163
- US-B2- 9 172 150

## Beschreibung

Die Erfindung betrifft einen Bauteilverbund mit wenigstens einem Funktionsbauteil und einem Haltebauteil, wobei das Funktionsbauteil zum Festgelegtwerden an dem Haltebauteil durch Einpressen eines Verbindungselements des Funktionsbauteils in eine in dem Haltebauteil vorgesehene Vertiefung ausgebildet ist. Des Weiteren betrifft die Erfindung ein Verfahren zum Festlegen eines Funktionsbauteils an einem Haltebauteil.

Die DE 10 2004 042 478 A1 beschreibt ein Verfahren zur verdrehsicheren Befestigung eines Funktionsbauteils wie etwa eines Einpressbolzens an einem weiteren Bauteil. Hierbei weist das weitere Bauteil eine als Sackloch ausgebildete Aufnahmeöffnung auf. Der zylinderförmige Einpressbolzen weist an seinem einen stirnseitigen Ende einen Umformbereich auf, welcher durch einen ringartigen Fuß mit einer zentralen und nach innen gerichteten Wölbung gebildet ist. Beim Setzvorgang wird der Einpressbolzen in das Sackloch eingepresst. Hierbei wird der Fuß nach außen umgeformt und dringt in die Seitenwandung des Sacklochs ein.

Als nachteilig ist hierbei der Umstand anzusehen, dass sich eine Endlage des Einpressbolzens nicht gut reproduzierbar vorgeben lässt. Dadurch lässt sich der Einpressvorgang auch lediglich mit einer unbefriedigenden Genauigkeit wiederholen.

Des Weiteren beschreibt die DE 10 2017 110 806 A1 eine formschlüssige Verbindung von Bauteilen eines Getriebes in Form eines Gussträgers und eines Deckels miteinander. Hierbei wird die formschlüssige Verbindung mittels eines Stempels hergestellt, welcher Material eines Nietkopfs des Deckels in einen Hinterschnitt plastisch verdrängt, welcher in dem Gussträger ausgebildet ist. Die US 9172150 B2 beschreibt einen weiteren Bauteilverbund.

Aufgabe der vorliegenden Erfindung ist es, ein Funktionsbauteil der eingangs genannten Art zu schaffen, bei welchem sich besonders gut reproduzierbar eine präzise Festlegung an dem Haltebauteil realisieren lässt, sowie einen entsprechenden Bauteilverbund und ein entsprechendes Verfahren anzugeben.

Diese Aufgabe wird durch einen Bauteilverbund mit den Merkmalen des Patentanspruchs 1 und durch ein Verfahren mit den Merkmalen des Patentanspruchs 9 gelöst. Vorteilhafte Ausgestaltungen mit zweckmäßigen Weiterbildungen der Erfindung sind in den abhängigen Patentansprüchen und in der nachfolgenden Beschreibung angegeben.

Das Funktionsbauteil ist dazu ausgebildet, an einem Haltebauteil festgelegt zu werden, und zwar durch Einpressen eines Verbindungselements des Funktionsbauteils in eine in dem Haltebauteil vorgesehene Vertiefung. Das Verbindungselement steht in einem nicht deformierten Zustand in eine Einpressrichtung von einem Grundkörper des Funktionsbauteils ab. Hierbei ist die Einpressrichtung diejenige Richtung, in welche das Verbindungselement in die Vertiefung des Haltebauteils eingepresst wird, um das Funktionsbauteil an dem Haltebauteil festzulegen. Das Verbindungselement ist dazu ausgebildet, durch Aufbringen einer in die Einpressrichtung wirkenden Kraft auf den Grundkörper in einen deformierten Zustand überführt zu werden. In dem deformierten Zustand des Verbindungselements ist das Verbindungselement in einem freien Endbereich aufgeweitet. Des Weiteren ist der freie Endbereich des Verbindungselements in dem deformierten Zustand des Verbindungselements in eine die Vertiefung des Haltebauteils in Umfangsrichtung begrenzende Wandung des Haltebauteils eingebracht. Der Grundkörper des Funktionsbauteils weist eine um das Verbindungselement umlaufende Anlagefläche auf. Die Anlagefläche liegt in einem Koppelzustand des Funktionsbauteils, in welchem das Funktionsbauteil durch das Einpressen des Verbindungselements in die Vertiefung an dem Haltebauteil festgelegt ist, an einer Auflagefläche des Haltebauteils an. Durch einen der Anlagefläche abgewandten Teilbereich des Grundkörpers ist ein Funktionsmodul des Funktionsbauteils bereitgestellt.

Das Vorsehen der um das Verbindungselement umlaufenden Anlagefläche an dem Grundkörper sorgt bei dem Funktionsbauteil dafür, dass beim Einpressen des Verbindungselements in die Vertiefung des Haltebauteils eine definierte Endlage oder Endstellung des Funktionsbauteils vorgegeben ist. Diese Endlage oder Endstellung erreicht das Funktionsbauteil nämlich dann, wenn die Anlagefläche des Funktionsbauteils an der Auflagefläche des Haltebauteils anliegt. Folglich lässt sich bei dem Funktionsbauteil besonders gut reproduzierbar eine präzise Festlegung an dem Haltebauteil realisieren.

Zudem sorgt das Bereitstellen des Funktionsmoduls des Funktionsbauteils durch den der Anlagefläche abgewandten Teilbereich des Grundkörpers dafür, dass das Funktionsbauteil eine diesem zugedachte Funktion erfüllen kann. Bei dieser Funktion kann es sich insbesondere um ein Festlegen eines weiteren Bauteils an dem Funktionsbauteil handeln. Das Funktionsbauteil kann daher insbesondere bei einem Kraftfahrzeug in vorteilhafter Weise zum Einsatz kommen. Denn im Kraftfahrzeugbau ist man regelmäßig mit der Aufgabenstellung konfrontiert, auf einfache Weise weitere Bauteile an einem Funktionsbauteil anzuordnen beziehungsweise ein weiteres Bauteil mit dem Funktionsbauteil zu verbinden, wobei das Funktionsbauteil wiederum an dem Haltebauteil festgelegt ist.

Aufgrund des Vorsehens der Anlagefläche kann ein sehr wiederholgenauer Sitz des Funktionsbauteils beziehungsweise Einpresselements bezogen auf das Haltebauteil und insbesondere die Auflagefläche des Haltebauteils beim Festlegen des Funktionsbauteils an dem Haltebauteil erreicht werden, welches vorliegend durch das Einpressen des Verbindungselements in die Vertiefung vorgenommen wird. Dies gilt zum einen im Hinblick auf eine Ausrichtung des Funktionsmoduls relativ zu der Auflagefläche des Haltebauteils. Insbesondere kann nämlich sehr einfach eine im Wesentlichen senkrechte Ausrichtung einer vorzugsweise mit der Einpressrichtung zusammenfallenden Mittelachse des Funktionsmoduls bezogen auf die Auflagefläche des Haltebauteils sichergestellt werden.

Zudem ist durch die Anlagefläche des Funktionsbauteils ein Endanschlag für den Einpressvorgang bereitgestellt, sodass auch eine vorbestimmte Längserstreckung beziehungsweise Höhe des Funktionsmoduls bezogen auf die Auflagefläche des Haltbauteils sehr gut reproduzierbar und präzise eingehalten beziehungsweise eingestellt werden kann.

Des Weiteren kann durch Vorgeben eines Abstands des beim Einpressen des Verbindungselements in die Vertiefung sich aufweitenden oder sich aufspreizenden freien Endbereichs von der Anlagefläche sehr gut vorbestimmt werden, an welcher Stelle der die Vertiefung des Haltebauteils in Umfangsrichtung begrenzenden Wandung eine Krafteinleitung in das Haltebauteil erfolgt. Die Einleitung der Expansionskraft des nach Art eines Spreizfußes ausgebildeten freien Endbereichs des Verbindungselements in das Haltebauteil im Bereich der Vertiefung des Haltebauteils kann somit sehr gut gezielt so eingestellt werden, dass eine gute Kraftaufnahme durch das Haltebauteil gewährleistet ist.

Dies sorgt für eine sehr sichere Verankerung des Funktionsbauteils an dem Haltebauteil mittels des in dem freien Endbereich aufgespreizten oder aufgeweiteten Verbindungselements. Des Weiteren kann so sehr zuverlässig vermieden werden, dass es infolge des Verbindens des Funktionsbauteils mit dem Haltebauteil durch das Einpressen zu einer unerwünschten Beschädigung oder gar einem Versagen des Haltebauteils kommt.

Außerdem kann das Festlegen des Funktionsbauteils an dem Haltebauteil sehr einfach durch ein kraftgesteuertes Einpressen des Verbindungselements in die Vertiefung vorgenommen werden. Denn beim Einpressen des Verbindungselements in die Vertiefung gelangt zunächst der aufweitbare beziehungsweise aufspreizbare freie Endbereich des Verbindungselements in Anlage mit einem Grund beziehungsweise einem Bodenbereich der Vertiefung. Daran anschließend verklemmt sich dann der freie Endbereich des Verbindungselements in der Wandung des Haltebauteils, welche die Vertiefung des Haltebauteils in Umfangsrichtung begrenzt.

Dieses Eindringen des freien Endbereichs in die Wandung des Haltebauteils sorgt für eine besonders innige und sichere Verbindung des Funktionsbauteils mit dem Haltebauteil. Und das Anliegen der Anlagefläche des Grundkörpers an der Auflagefläche des Haltebauteils macht sich beim Einpressen durch ein plötzliches Ansteigen der beim Einpressen auf den Grundkörper aufzubringenden Kraft bemerkbar. Anhand dieses Kraftanstiegs kann somit sehr gut festgestellt werden, wann der Einpressvorgang beendet beziehungsweise abgeschlossen ist.

Je nach Ausgestaltung des Funktionsmoduls lassen sich durch das Funktionsbauteil unterschiedliche Funktionen bereitstellen. Dennoch braucht nicht bereits bei der Fertigung des Haltebauteils die Verbindung mit dem Funktionsbauteil vorgenommen zu werden. Vielmehr kann beispielsweise das Haltebauteil eine Mehrzahl von Vertiefungen aufweisen, und lediglich die in einem konkreten Anwendungsfall gewünschten Vertiefungen werden dann mit dem jeweiligen Funktionsbauteil bestückt.

Dies ist insbesondere im Hinblick auf eine Realisierung einer Mehrzahl von Varianten basierend auf demselben Haltebauteil vorteilhaft, wobei sich die Varianten insbesondere in dem Ort der Anbringung der Funktionsbauteile und/oder in der Art der Funktionsbauteile unterscheiden können. Folglich ist eine besonders große Flexibilität bei der Bereitstellung eines Bauteilverbunds gegeben, bei welchem das Haltebauteil mit wenigstens einem Funktionsbauteil bestückt ist.

Vorzugsweise ist das Funktionsmodul zum Herstellen einer Schweißverbindung des Funktionsbauteils mit einem weiteren Bauteil ausgebildet. Dementsprechend ist das Funktionsmodul als Teilbereich des Grundkörpers ausgebildet sein, in welchem der Grundkörper die Gestalt einer Platte oder eine sonstige für das Schweißen, insbesondere Punktschweißen, geeignete Kontur oder dergleichen aufweist. Insbesondere kann an einer ersten Seite dieser Platte, an welcher das Verbindungselement von dem Grundkörper absteht, die Anlagefläche ausgebildet sein. Durch eine der Anlagefläche gegenüberliegende zweite Seite der Platte kann dann eine Schweißfläche bereitgestellt sein, an welcher das weitere Bauteil durch das Schweißen, insbesondere durch Punktschweißen, mit dem Funktionsbauteil verbunden werden kann. Eine derartige Ausgestaltung des Funktionsbauteils ist insbesondere dann vorteilhaft, wenn das Haltebauteil aus einem nicht schweißbaren Werkstoff gebildet ist, während sich der Werkstoff des Funktionsbauteils für das Herstellen einer Schweißverbindung eignet.

Zusätzlich oder alternativ kann das Funktionsmodul einen stiftförmigen Fortsatz umfassen, welcher mit dem Verbindungselement fluchtet. Hierbei ist die Anlagefläche an einer dem stiftförmigen Fortsatz abgewandten Seite eines kragenartigen Stegs des Funktionsbauteils ausgebildet. Der Steg läuft um den stiftförmigen Fortsatz um. Bei einer derartigen Ausgestaltung kann beim Einpressen sehr gut und sehr gleichmäßig die dem Einpressen dienende Kraft auf den Steg aufgebracht werden, und zwar auf die der Anlagefläche abgewandte beziehungsweise auf die der Anlagefläche gegenüberliegende Seite des Stegs. Dies ist im Hinblick auf eine sehr gleichmäßige Krafteinleitung und somit auch ein gleichmäßiges Einpressen des Verbindungselements in die Vertiefung des Haltebauteils vorteilhaft. Des Weiteren lässt sich der stiftförmige Fortsatz des Funktionsmoduls sehr vorteilhaft nutzen, insbesondere zum Festlegen wenigstens eines weiteren Bauteils an dem Funktionsbauteil.

Der stiftförmige Fortsatz kann einen Endbereich aufweisen, welcher gegenüber einem Schaftbereich des stiftförmigen Fortsatzes verbreitert ist. Dementsprechend kann das Funktionsmodul insgesamt beispielsweise nach Art eines Kugelbolzens oder eines derartigen, eine hinterrastbare Kontur aufweisenden Bereichs des Funktionsbauteils ausgebildet sein. Ein derartiges Funktionsmodul eignet sich gut zur Festlegung eines weiteren Bauteils an dem Funktionsbauteil.

Zusätzlich oder alternativ kann der stiftförmige Fortsatz ein Außengewinde aufweisen. Auch dies ist im Hinblick auf das Festlegen eines weiteren Bauteils an dem Funktionsbauteil über das Funktionsmodul vorteilhaft.

Das Außengewinde kann insbesondere als metrisches Gewinde beziehungsweise metrisches ISO-Gewinde ausgebildet sein, sodass sich eine mit einem korrespondierenden metrischen Gewinden versehene Mutter oder dergleichen Element sehr einfach und prozesssicher an dem Funktionsmodule anbringen lässt.

Alternativ kann das Außengewinde als Grobgewinde ausgebildet sein, bei welchem insbesondere größere Abstände von Gewindegängen des Gewindes voneinander vorgesehen sein können als bei einer Ausbildung des Außengewindes als metrisches ISO-Gewinde. Auch ein derartiges Grobgewinde eignet sich gut zum Anbringen eines weiteren Bauteils an dem Funktionsbauteil über das Funktionsmodul.

Vorzugsweise weist der Steg wenigstens einen Vorsprung auf, welcher von der Anlagefläche in die Einpressrichtung absteht. Ein derartiger, beispielsweise nach Art einer Noppe oder dergleichen ausgebildeter Vorsprung dringt beim Einpressvorgang in das Haltebauteil ein, bis die Anlagefläche des Grundkörpers an der Auflagefläche des Haltebauteils anliegt. Dies sorgt für eine besonders gute Verankerung des Funktionsbauteils an dem Haltebauteil.

Insbesondere wenn das Funktionsmodul den mit dem Außengewinde versehenen stiftförmigen Fortsatz aufweist, erfüllt der wenigstens eine Vorsprung einen weiteren vorteilhaften Zweck. Denn der wenigstens eine in das Haltebauteil eingepresste Vorsprung sorgt für einen Verdrehschutz, etwa wenn ein weiteres Bauteil in Form einer Mutter oder dergleichen mit dem das Außengewinde aufweisenden stiftförmigen Fortsatz verschraubt wird. Aufgrund des Vorsehens des wenigstens einen Vorsprungs können bei einem solchen Verschrauben auftretende Verdrehkräfte besonders gut von dem Haltebauteil aufgenommen beziehungsweise in das Haltebauteil eingeleitet werden.

Vorzugsweise ist eine Stirnseite des freien Endbereichs bezogen auf die Anlagefläche geneigt ausgebildet. Hierbei ist ein innerer Rand der Stirnseite der Anlagefläche näher als ein äußerer Rand der Stirnseite. Durch eine derartige, abgeschrägte Ausbildung des freien Endbereichs an dessen Stirnseite lässt sich in besonders wirksamer Weise dafür sorgen, dass es beim Einpressen des Verbindungselements in die Vertiefung zu der Aufweitung beziehungsweise Aufspreizung des Verbindungselements in dem freien Endbereich kommt. Dies sorgt wiederum auf prozesssichere Art und Weise dafür, dass sich der freie Endbereich in die Wandung des Haltebauteils einschneidet beziehungsweise in die Wandung eindringt, welche die Vertiefung des Haltebauteils in Umfangsrichtung begrenzt.

Vorzugsweise weist das Verbindungselement in dem nicht deformierten Zustand in dem freien Endbereich eine Einbuchtung auf, welche in Umfangsrichtung von einer Wandung des Verbindungselements begrenzt ist. Durch eine derartige Ausgestaltung des Verbindungselements kann sehr zuverlässig dafür gesorgt werden, dass sich der freie Endbereich beim Einpressen des Verbindungselements in die Vertiefung aufweitet beziehungsweise aufspreizt.

Es kann vorgesehen sein, dass durch Verbringen des Verbindungselements in den deformierten Zustand ein Bodenbereich der Einbuchtung mit einem Bodenbereich oder Grund der Vertiefung in Anlage bringbar ist. Dies ist einer besonders innigen Verbindung des Funktionsbauteils mit dem Haltebauteil zuträglich.

Der erfindungsgemäße Bauteilverbund weist wenigstens ein Funktionsbauteil und ein Haltebauteil auf. An dem Haltebauteil ist das wenigstens eine Funktionsbauteil durch Einpressen des Verbindungselements in wenigstens eine Vertiefung festgelegt, welche in dem Haltebauteil vorgesehen ist.

Vorzugsweise ist das Haltebauteil zumindest im Bereich der Vertiefung aus einem weicheren Material gebildet als das wenigstens eine Funktionsbauteil. So kann zuverlässig dafür gesorgt werden, dass der sich beim Einpressen aufspreizende freie Endbereich des Verbindungselements in die Wandung des Haltebauteils eintritt beziehungsweise eindringt, welche die in dem Haltebauteil ausgebildete Vertiefung in Umfangsrichtung begrenzt. So lässt sich eine sehr sichere Festlegung des wenigstens einen Funktionsbauteils an dem Haltebauteil realisieren.

Insbesondere kann das Haltebauteil als Druckgussbauteil ausgebildet sein. Dies ist im Hinblick auf eine präzise Fertigung des Haltebauteils vorteilhaft. Des Weiteren lässt sich durch Ausbilden des Haltebauteils als Druckgussbauteil gut dafür sorgen, dass das Haltebauteil zumindest im Bereich der Vertiefung aus einem weicheren Material gebildet ist als das wenigstens eine Funktionsbauteil. Dies gilt insbesondere, wenn das Druckgussbauteil aus einer Aluminiumlegierung gebildet ist. Des Weiteren kann das Funktionsbauteil insbesondere aus einem Stahl gebildet sein.

Die Vertiefung kann auf unterschiedliche Arten in das Haltebauteil eingebracht sein, beispielsweise durch eine spanende Bearbeitung, insbesondere durch Bohren.

Besonders aufwandsarm lässt sich die wenigstens eine Vertiefung in dem Haltebauteil vorsehen, wenn die Vertiefung bereits bei der Herstellung des Haltebauteils als Druckgussbauteil mit ausgebildet wird. Insbesondere dann, wenn das Haltebauteils als Druckgussbauteil ausgebildet ist, hat es sich als vorteilhaft gezeigt, wenn die wenigstens eine Vertiefung die Form eines sich entgegen der Einpressrichtung verbreiternden Kegelstumpfs aufweist. Denn dann kann bei der Herstellung des Haltebauteils als Druckgussbauteil das Haltebauteil sehr gut entgegen der Einpressrichtung entformt beziehungsweise aus einer Gussform entnommen werden.

Vorzugsweise ist in dem deformierten Zustand des Verbindungselements zwischen einer Außenseite des Verbindungselements und einer die Vertiefung des Haltebauteils in Umfangsrichtung begrenzenden Wandung des Haltebauteils ein Zwischenraum ausgebildet. Durch einen derartigen, insbesondere nach Art einer Lufttasche ausgebildeten Zwischenraum können sehr gut Spannungen kompensiert werden, welche aufgrund unterschiedlicher Wärmeausdehnungen des Funktionsbauteils und des Haltebauteils auftreten können. Beispielsweise ist dies also dann vorteilhaft, wenn das Funktionsbauteil aus einem Stahl gebildet ist und das Haltebauteil als aus einer Aluminiumlegierung gebildetes Druckgussbauteil.

Bei dem erfindungsgemäßen Verfahren zum Festlegen eines, insbesondere für ein Kraftfahrzeug vorgesehenen, Funktionsbauteils an einem Haltebauteil durch Einpressen eines Verbindungselements des Funktionsbauteils in eine in dem Haltebauteil vorgesehene und nach Art eines Sacklochs ausgebildete Vertiefung steht in einem nicht deformierten Zustand des Verbindungselements das Verbindungselement in eine Einpressrichtung von einem Grundkörper des Funktionsbauteils ab. Das Verbindungselement wird durch Aufbringen einer in die Einpressrichtung auf den Grundkörper wirkenden Kraft in einen deformierten Zustand überführt. In dem deformierten Zustand des Verbindungselements ist das Verbindungselement in einem freien Endbereich aufgeweitet. Bei diesem Aufweiten oder Spreizen des freien Endbereichs wird der freie Endbereich des Verbindungselements in eine Wandung des Haltebauteils eingebracht, welche die Vertiefung des Haltebauteils in Umfangsrichtung begrenzt. Der Grundkörper des Funktionsbauteils weist eine um das Verbindungselement umlaufende Anlagefläche auf, welche zum Herbeiführen eines Koppelzustands des Funktionsbauteils in Anlage mit einer Auflagefläche des Haltebauteils gebracht wird. In dem Koppelzustand des Funktionsbauteils ist das Funktionsbauteil durch das Einpressen des Verbindungselements in die Vertiefung an dem Haltebauteil festgelegt. Durch einen der Anlagefläche abgewandten Teilbereich des Grundkörpers wird ein Funktionsmodul des Funktionsbauteils bereitgestellt.

Mittels eines derartigen Verfahrens lässt sich besonders gut reproduzierbar eine präzise Festlegung des Funktionsbauteils an dem Haltebauteil realisieren.

Vorzugsweise wird eine Länge des Verbindungselements in der Einpressrichtung durch Überführen des Verbindungselements in den deformierten Zustand auf eine Länge verringert, welche einer Tiefe der Vertiefung entspricht. Dementsprechend ist die Länge des Verbindungselements in der Einpressrichtung vorzugsweise größer als die Tiefe der Vertiefung, wenn das Verbindungselement den nicht deformierten Zustand aufweist. Auf diese Weise lässt sich eine sehr belastbare Verbindung des Funktionsbauteils mit dem Haltebauteil erreichen, indem der freie Endbereich des Verbindungselements in die Wandung des Haltebauteils eindringt, welche die Vertiefung des Haltebauteils in Umfangsrichtung begrenzt.

Die für das Funktionsbauteil und den erfindungsgemäßen Bauteilverbund beschriebenen Vorteile und bevorzugten Ausführungsformen gelten auch für das erfindungsgemäße Verfahren und umgekehrt.

Dementsprechend gehören zu der Erfindung insbesondere auch Weiterbildungen des erfindungsgemäßen Verfahrens, die Merkmale aufweisen, wie sie bereits im Zusammenhang mit den Weiterbildungen des Funktionsbauteils und/oder des erfindungsgemäßen Bauteilverbunds beschrieben worden sind. Aus diesem Grund sind die entsprechenden Weiterbildungen des erfindungsgemäßen Verfahrens hier nicht noch einmal beschrieben.

Die Erfindung umfasst auch Ausführungsformen, die jeweils eine Kombination der Merkmale mehrerer der beschriebenen Ausführungsformen aufweisen, sofern die Ausführungsformen nicht als sich gegenseitig ausschließend beschrieben wurden, und solange die Ausführungsformen unter den Wortlaut der beigefügten Ansprüche fallen.

Im Folgenden sind Ausführungsbeispiele der Erfindung beschrieben. Hierzu zeigt:
- Fig. 1: einen ersten Schritt beim Festlegen eines Funktionsbauteils an einem Haltebauteil, wobei das Haltebauteil als aus einer Aluminiumlegierung gebildetes Druckgussbauteil ausgebildet ist;
- Fig. 2: einen weiteren Schritt der Festlegung des Funktionsbauteils an dem Haltebauteil, wobei ein Verbindungselement des Funktionsbauteils in Anlage mit einem Grund einer Vertiefung ist, welche in dem Haltebauteil ausgebildet ist;
- Fig. 3: einen weiteren Schritt der Verbindung des Funktionsbauteils mit dem Haltebauteil, wobei das Funktionsbauteil seine Endlage oder Endposition erreicht hat und ein Endbereich des Verbindungselements in eine Wandung eingedrungen ist, welche die in dem Haltebauteil ausgebildete Vertiefung umfangsseitig begrenzt;
- Fig. 4: eine beispielhafte Ausgestaltung des Funktionsbauteils als Punktschweißfuß;
- Fig. 5: eine weitere beispielhafte Ausgestaltung des Funktionsbauteils als Kugelbolzen;
- Fig. 6: eine weitere beispielhafte Ausgestaltung des Funktionsbauteils als Grobgewindestift; und
- Fig. 7: eine weitere beispielhafte Ausgestaltung des Funktionsbauteils als Gewindestift mit einem metrischen Gewinde.

Bei den im Folgenden erläuterten Ausführungsbeispielen handelt es sich um bevorzugte Ausführungsformen der Erfindung.

Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

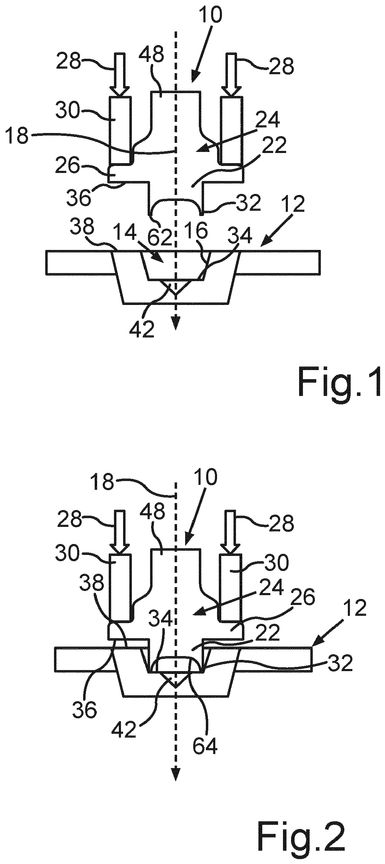

Fig. 1 zeigt stark schematisiert ein Funktionsbauteil 10 für ein Kraftfahrzeug, welches mit einem Haltebauteil 12 verbunden werden beziehungsweise an dem Haltebauteil 12 festgelegt werden soll. Das Haltebauteil 12 ist vorliegend als Druckgussbauteil ausgebildet, welches aus einer Aluminiumlegierung gebildet ist. Beim Fertigen des Haltebauteils 12 durch Druckgießen der Aluminiumlegierung, also durch Aluminium-Druckguss, wird in dem Haltebauteil 12 eine nach Art eines Sacklochs ausgebildete Vertiefung 14 mit hergestellt. Aus Fig. 1 ist diesbezüglich ersichtlich, dass eine Wandung 16, welche die Vertiefung 14 in Umfangsrichtung begrenzt, geneigt ausgebildet ist. Dementsprechend weist die Wandung 16 eine Entformungsschräge auf, welche das Entformen des Haltebauteils 12 aus einer (nicht gezeigten) Druckgussform erleichtert.

Insbesondere kann die Vertiefung 14 als Sackloch ausgebildet sein, welches insbesondere durch Bohren oder dergleichen spanende Bearbeitung in dem Haltebauteil 12 hergestellt wird. Insbesondere in einem solchen Fall kann die Wandung 16 des Sacklochs gerade beziehungsweise parallel zu einer Einpressrichtung 18 ausgebildet sein, welche in Fig. 1 durch einen Pfeil veranschaulicht ist. Die Einpressrichtung 18 fällt auch mit einer Längsachse des Funktionsbauteils 10 zusammen.

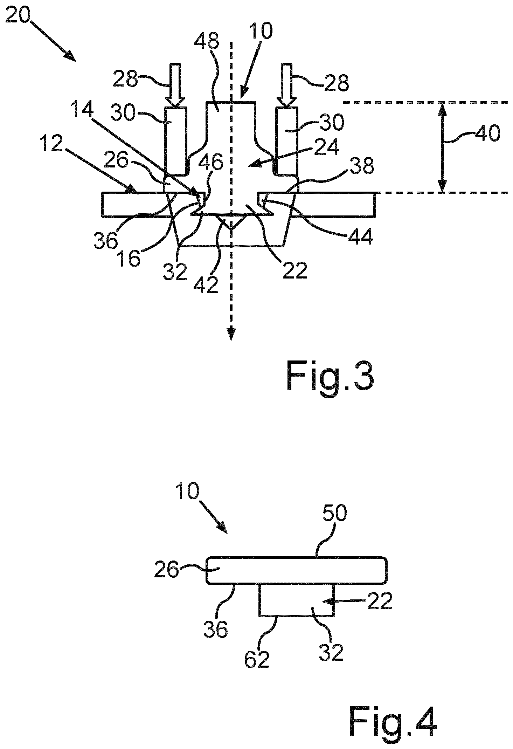

Zum Herstellen eines in Fig. 3 gezeigten Bauteilverbunds 20, welcher das Funktionsbauteil 10 und das Haltebauteil 12 umfasst, wird ein Verbindungselement 22 des Funktionsbauteils 10 in die Vertiefung 14 eingepresst, welche in dem Haltebauteil 12 ausgebildet ist. Das Verbindungselement 22 steht in die Einpressrichtung 18 von einem Grundkörper 24 des Funktionsbauteils 10 ab. Das nach Art eines Fortsatzes ausgebildete Verbindungselement 22 ist in Fig. 1 in einem noch nicht deformierten Zustand gezeigt.

Zum Festlegen des Funktionsbauteils 10 an dem Haltebauteil 12 durch das Einpressen des Verbindungselements 22 in die Vertiefung 14 wird auf einen kragenartigen Steg 26 des Funktionsbauteils 10 eine Kraft aufgebracht. Diese Kraft ist in Fig. 1 durch Pfeile 28 veranschaulicht. Insbesondere kann die Kraft über ein Druckstück 30 auf den Steg 26 aufgebracht werden, welches in Fig. 1 schematisch dargestellt ist und welches insbesondere kreiszylindrisch ausgebildet sein kann.

Durch Aufbringen dieser in die Einpressrichtung 18 wirkenden Kraft auf den Grundkörper 24 und vorliegend speziell auf den Steg 26 wird zunächst dafür gesorgt, dass ein freier Endbereich 32 des Verbindungselements 22 in Anlage mit einem Bodenbereich oder Grund 34 der Vertiefung 14 gerät (vergleiche Fig. 2). Das Einpressen des Verbindungselements 22 in die Bohrung beziehungsweise Vertiefung 14 erfolgt vorzugsweise kraftgesteuert.

Bei dem Einpressen des Verbindungselements 22 in die Vertiefung 14 kommt zunächst der nach Art eines Spreizfußes ausgebildete freie Endbereich 32 des Verbindungselements 22 auf dem Grund 34 der Vertiefung 14 zur Auflage. In diesem, in Fig. 2 gezeigten Zustand ist jedoch eine um das Verbindungselement 22 umlaufende Anlagefläche 36 des Grundkörpers 24 noch von einer Auflagefläche 38 des Haltebauteils 12 beabstandet. Anschließend wird der Einpressvorgang fortgesetzt. Dies geschieht solange, bis der kragenartige Steg 26 oder Bund des Funktionsbauteils 10 in Anlage mit dem Haltebauteil 12 kommt. Dementsprechend liegt dann auch die vorliegend an dem Steg 26 oder Bund ausgebildete Anlagefläche 36 des Funktionsbauteils 10, insbesondere flächig, an der Auflagefläche 38 des Haltebauteils 12 an. Dieser Zustand, in welchem der Bauteilverbund 20 ausgebildet oder hergestellt ist, ist in Fig. 3 gezeigt.

Das Einpressen des Verbindungselements 22 in die Vertiefung 14 führt dazu, dass der freie Endbereich 32 des Verbindungselements 22 in einen in Fig. 3 dargestellten Zustand überführt wird, in welchem der freie Endbereich 32 deformiert ist. Dieser deformierte Zustand des Verbindungselements 22 ist schematisch in Fig. 3 veranschaulicht. Demgemäß verklemmt sich der nach Art eines Spreizfußes ausgebildete freie Endbereich 32 des Verbindungselements 22 in der Vertiefung 14 beziehungsweise Bohrung des Gussteils oder Haltebauteils 12. Mit anderen Worten dringt der freie Endbereich 32 in die Wandung 16 ein, welche die Vertiefung 14 des Haltebauteils 12 in Umfangsrichtung begrenzt. Dieses Eindringen beziehungsweise dieses Eingebrachtsein des freien Endbereichs 32 in die Wandung 16, welche die Vertiefung 14 des Haltebauteils 12 in Umfangsrichtung begrenzt, ist in Fig. 3 schematisch dargestellt.

Durch den vorliegend um das Verbindungselement 22 umlaufenden Steg 26 beziehungsweise Bund, an welchem die Anlagefläche 36 ausgebildet ist, ist ein Endanschlag für den Verpressvorgang oder Einpressvorgang bereitgestellt. Dadurch ergibt sich beim Verbinden des Funktionsbauteils 10 mit dem Haltebauteil 12 durch das Einpressen des Verbindungselements 22 in die Vertiefung 14 ein sehr wiederholgenauer Prozess. Denn nach der Auflage des Bunds oder Stegs 26 auf der Oberfläche beziehungsweise Auflagefläche 38 des Haltebauteils 12 kommt es zu einem deutlich spürbaren Kraftanstieg. Dies weist darauf hin, dass der Einpressvorgang abgeschlossen ist.

Des Weiteren lässt sich so ein sehr wiederholgenauer Sitz des Einpresselements oder Funktionsbauteils 10 bezogen auf die Oberfläche des Haltebauteils 12 beziehungsweise Gussbauteils erreichen, und zwar sowohl im Hinblick auf den Winkel als auch auf eine Höhe 40 des Funktionsbauteils 10 über der Auflagefläche 38. Denn zum einen kann durch den Bund oder Steg 26 sichergestellt werden, dass das Funktionsbauteil 10 bezogen auf das Haltebauteil 12 gerade ausgerichtet wird, also derart, dass die Einpressrichtung 18 und somit die Längsachse des Funktionsbauteils 10 beispielsweise senkrecht zu der Auflagefläche 38 des Haltebauteils 12 verläuft. Hierfür ist vorliegend auch die Anlagefläche 36 senkrecht zu der Einpressrichtung 18 ausgebildet. Des Weiteren ist bei diesem Einpressvorgang auch die Höhe 40 des Funktionsbauteils 10 bezogen auf die Auflagefläche 38 sehr präzise vorgegeben, welche vorliegend einem Abstand eines oberen Endes des Grundkörpers 24 von der Anlagefläche 36 entspricht.

Zudem erfolgt die Einleitung der Expansionskraft des freien Endbereichs 32 beziehungsweise Spreizfußes in das Gussbauteil oder Haltebauteil 12 im Bereich des Grunds 34 der Bohrung oder Vertiefung 14. Auf diese Weise kann eine sehr gute Kraftaufnahme über das Gussbauteil beziehungsweise Haltebauteil 12 erreicht werden.

Des Weiteren erfolgt vorliegend das Einbringen der Funktionselemente oder Funktionsbauteile 10 unabhängig von der Herstellung des Haltebauteils 12, welche vorliegend durch das Druckgießen der Aluminiumlegierung vorgenommen wird. Es braucht also nicht beispielsweise ein Funktionselement oder Funktionsbauteil 10 bereits beim Druckgießen an einer gewünschten Stelle in die Gussform eingelegt zu werden, um die Verbindung mit dem Gussbauteil beziehungsweise Haltebauteil 12 zu erreichen. Vielmehr können zunächst in dem Haltebauteil 12 an einer Mehrzahl von Stellen jeweilige Vertiefungen 14 vorgesehen werden, und lediglich die für einen bestimmten Einsatzzweck benötigte Vertiefung 14 wird dann mit dem entsprechenden Funktionsbauteil 10 bestückt.

Etwa aus Fig. 1 ist weiter ersichtlich, dass an dem Grund 34 der Vertiefung 14 eine weitere Bohrung 42 oder Eintiefung ausgebildet sein kann. Insgesamt kann somit die Vertiefung 14 nach Art einer abgesetzten Bohrung ausgebildet sein. Die weitere Bohrung 42 kann insbesondere vorgesehen sein, um lokal eine Wandstärke des Haltebauteils 12 zu reduzieren. Dies kann sinnvoll sei, um eine Ausbildung von Einfallstellen oder dergleichen beim Abkühlen des vorliegend als Aluminium-Druckgussteil ausgebildeten Haltebauteils 12 zu vermeiden.

Insbesondere aus Fig. 3 ist ersichtlich, dass zwischen einer Außenseite 46 des Verbindungselements 22 und der die Vertiefung 14 des Haltebauteils 12 in Umfangsrichtung begrenzenden Wandung 16 des Haltebauteils 12 ein Zwischenraum 44 ausgebildet sein kann. Dieser nach Art einer Lufttasche ausgebildete Zwischenraum 44 sorgt dafür, dass Spannungen aufgrund unterschiedlicher Wärmeausdehnungen des Materials des Funktionsbauteils 10 und des Materials des Haltebauteils 12 kompensiert werden können. Dies ist beispielsweise dann günstig, wenn das Funktionsbauteil 10 aus einem Stahl gebildet ist.

In Fig. 1 bis Fig. 3 ist das Funktionsbauteil 10 lediglich stark schematisiert dargestellt. Demgemäß weist das Funktionsbauteil 10 ein Funktionsmodul 48 auf, welches durch einen der Anlagefläche 36 abgewandten Teilbereich des Grundkörpers 24 bereitgestellt ist. Je nach Ausgestaltung dieses Funktionsmoduls 48 können durch das Funktionsbauteil 10 unterschiedliche Funktionen bereitgestellt werden. Dies soll mit Verweis auf die nachfolgenden Figuren verdeutlicht werden.

Beispielsweise kann gemäß Fig. 4 das Funktionsbauteil 10 als Schweißfuß zum Herstellen einer Verbindung durch Punktschweißen ausgebildet sein. Hierbei ist eine der Anlagefläche 36 des kragenartigen Stegs 26 oder Bunds gegenüberliegende Oberfläche 50 des Funktionsbauteils 10 eben ausgebildet. An dieser bei der vorliegend beispielhaft gezeigten Ausgestaltung ebenen Oberfläche 50 kann eine Verbindung eines weiteren (nicht gezeigten) Bauteils mit dem Bauteilverbund 20 hergestellt werden, welcher das in Fig. 4 gezeigte Funktionsbauteil 10 und das Haltebauteil 12 umfasst, an welchem das Funktionsbauteil 10 festgelegt ist. Die Oberfläche 50 kann auch eine von der ebenen Form abweichende Gestalt oder Form aufweisen, um für das Herstellen einer Verbindung mit dem weiteren (nicht gezeigten) Bauteil durch Schweißen, insbesondere durch Punktschweißen, geeignet zu sein.

Bei den schematisch in Fig. 1 bis Fig. 3 gezeigten Ausgestaltungen des Funktionsbauteils 10 weist demgegenüber das Funktionsmodul 48 einen Fortsatz oder Vorsprung auf, welcher mit dem Verbindungselement 22 fluchtet und an einer Seite des Stegs 26 ausgebildet oder angeordnet ist, welche der Anlagefläche 36 gegenüberliegt. Mit anderen Worten ist bei diesem Funktionsbauteil 10 die Anlagefläche 36 an derjenigen Seite des Stegs 26 ausgebildet, welche dem Fortsatz oder Vorsprung abgewandt ist beziehungsweise gegenüberliegt.

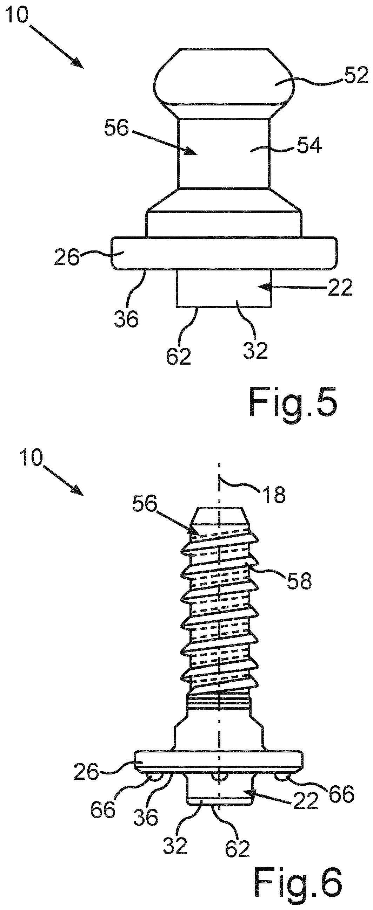

Anhand von Fig. 5 bis Fig. 7 sollen weitere beispielhafte Ausgestaltungen des Funktionsbauteils 10 verdeutlicht werden, bei welchen das Funktionsbauteil 10 einen derartigen, im Wesentlichen stiftförmigen Fortsatz 56 aufweist. So weist bei der in Fig. 5 beispielhaft gezeigten Ausgestaltung des Funktionsbauteils 10 der stiftförmige Fortsatz 56 einen kopfförmigen Endbereich 52 auf, welcher gegenüber einem Schaftbereich 54 des stiftförmigen Fortsatzes 56 verbreitert ist. Dementsprechend ist das in Fig. 5 gezeigte Funktionsbauteil 10 nach Art eines Kugelbolzens ausgebildet, durch welchen eine Rastfunktion bereitgestellt werden kann. Anstelle des vorliegend beispielhaft gezeigten kopfförmigen Endbereichs 52 kann das Funktionsbauteil 10 auch eine andere für ein Hinterrasten oder Verrasten eines weiteren Bauteils mit dem Bauteilverbund 20 geeignete Kontur aufweisen.

Bei der in Fig. 6 gezeigten Ausgestaltung des Funktionsbauteils 10 weist der stiftförmige Fortsatz 56 ein als Grobgewinde 58 ausgebildetes Außengewinde auf.

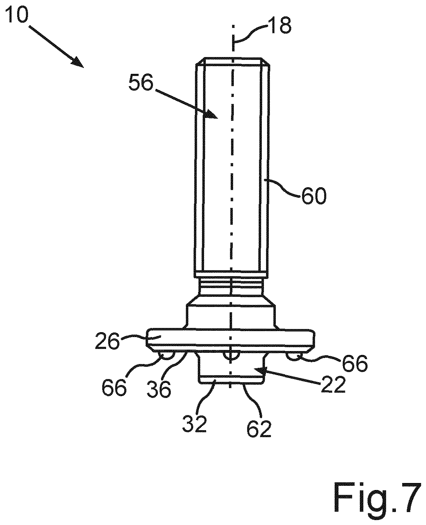

Demgegenüber weist bei dem in Fig. 7 gezeigten Funktionsbauteil 10 der stiftförmige Fortsatz 56 ein Außengewinde auf, welches als metrisches Gewinde 60 ausgebildet ist.

Sowohl bei dem in Fig. 6 gezeigten Funktionsbauteil 10 als auch bei dem in Fig. 7 gezeigten Funktionsbauteil 10 sind an einer in dem Bauteilverbund 20 (vergleiche Fig. 3) der Auflagefläche 38 des Haltebauteils 12 zugewandten Unterseite des Stegs 26 oder Bunds nach Art von Noppen 66 ausgebildete Vorsprünge angeordnet, welche in die Einpressrichtung 18 von der Unterseite oder Anlagefläche 36 des Stegs 26 abstehen.

Beim Verbinden des Funktionsbauteils 10 mit dem Haltebauteil 12 durch das Einpressen dringen diese Noppen 66 in das Haltbauteil 12 ein, bis die Anlagefläche 36 des Grundkörpers 24 mit der Auflagefläche 38 des Haltebauteils 12 in Kontakt oder Anlage ist. Durch das Vorsehen dieser Noppen 66 oder wenigstens eines derartigen Vorsprungs können insbesondere Verdrehkräfte gut in das Haltebauteil 12 eingeleitet werden, welche beim Verschrauben eines (nicht gezeigten) weiteren Bauteils wie etwa einer Mutter mit dem Außengewinde des Funktionsbauteils 10 auftreten. Durch die Noppen 66 ist somit in dem Bauteilverbund 20 (vergleiche Fig. 3) eine Verdrehsicherung für das Funktionsbauteil 10 bereitgestellt.

In vorliegend nicht näher gezeigter Art und Weise kann eine Stirnseite 62 (vergleiche Fig. 1) des freien Endbereichs 32 bezogen auf die Anlagefläche 36 geneigt ausgebildet sein. Hierbei ist vorzugsweise ein innerer Rand der Stirnseite 62 der Anlagefläche 36 näher als ein äußerer Rand der Stirnseite 62. Durch diese geneigte Geometrie der Stirnseite 62 des freien Endbereichs 32 kann besonders gut dafür gesorgt werden, dass sich das Verbindungselement 22 in dem freien Endbereich 32 aufspreizt und so in die Wandung 16 eindringt, nachdem der äußere Rand der Stirnseite 62 mit dem Grund 34 der Vertiefung 14 in Anlage wurde (vergleiche Fig. 2).

Insbesondere aus Fig. 1 und Fig. 2 ist weiter ersichtlich, dass das Verbindungselement 22 vorliegend in dem noch nicht deformierten Zustand in dem freien Endbereich 32 eine Einbuchtung 64 aufweist, welche in Umfangsrichtung von einer Wandung des Verbindungselements 22 begrenzt ist. Auch diese Einbuchtung 64 trägt dazu bei, dass sich beim Einpressen des Verbindungselements 22 in die Vertiefung 14 das Verbindungselement 22 in dem freien Endbereich 32 gut aufspreizen beziehungsweise aufweiten kann.

Insgesamt zeigen die Beispiele, wie in vorteilhafter Weise Funktionselemente beziehungsweise Funktionsbauteile 10 für das Haltebauteil 12 in Form des Aluminium-Druckgussteils bereitgestellt werden können.

## Patentansprüche

1. Bauteilverbund mit wenigstens einem Funktionsbauteil, insbesondere für ein Kraftfahrzeug, und mit einem Haltebauteil (12), wobei das Funktionsbauteil (10) an dem Haltebauteil (12) durch Einpressen eines Verbindungselements (22) des Funktionsbauteils (10) in eine in dem Haltebauteil (12) vorgesehene und nach Art eines Sacklochs ausgebildete Vertiefung (14) festgelegt ist, wobei das Verbindungselement (22) in einem nicht deformierten Zustand in eine Einpressrichtung (18) von einem Grundkörper (24) des Funktionsbauteils (10) absteht und dazu ausgebildet ist, durch Aufbringen einer in die Einpressrichtung (18) wirkenden Kraft (28) auf den Grundkörper (24) in einen deformierten Zustand überführt zu werden, in welchem das Verbindungselement (22) in einem freien Endbereich (32) aufgeweitet ist und der freie Endbereich (32) des Verbindungselements (22) in eine die Vertiefung (14) des Haltebauteils (12) in Umfangsrichtung begrenzende Wandung (16) des Haltebauteils (12) eingebracht ist, wobei
der Grundkörper (24) des Funktionsbauteils (10) eine um das Verbindungselement (22) umlaufende Anlagefläche (36) aufweist, welche in einem Koppelzustand des Funktionsbauteils (10), in welchem das Funktionsbauteil (10) durch das Einpressen des Verbindungselements (22) in die Vertiefung (14) an dem Haltebauteil (12) festgelegt ist, an einer Auflagefläche (38) des Haltebauteils (12) anliegt, wobei durch einen der Anlagefläche (36) abgewandten Teilbereich des Grundkörpers (24) ein Funktionsmodul (48) des Funktionsbauteils (10) bereitgestellt ist.

2. Bauteilverbund nach Anspruch 1,
**dadurch gekennzeichnet, dass**
das, insbesondere zum Festlegen eines weiteren Bauteils an dem Funktionsbauteil (10) ausgebildete, Funktionsmodul (18)
- zum Herstellen einer Schweißverbindung des Funktionsbauteils (10) mit einem weiteren Bauteil ausgebildet ist und/oder
- einen stiftförmigen Fortsatz (56) umfasst, welcher mit dem Verbindungselement (22) fluchtet, wobei die Anlagefläche (36) an einer dem stiftförmigen Fortsatz (56) abgewandten Seite eines kragenartigen Stegs (26) des Funktionsbauteils (10) ausgebildet ist, welcher um den stiftförmigen Fortsatz (56) umläuft.

3. Bauteilverbund nach Anspruch 2,
**dadurch gekennzeichnet, dass**
der stiftförmige Fortsatz (56)
- einen Endbereich (52) aufweist, welcher gegenüber einem Schaftbereich (54) des stiftförmigen Fortsatzes (56) verbreitert ist, und/oder
- ein, insbesondere als Grobgewinde (58) oder als metrisches Gewinde (60) ausgebildetes, Außengewinde aufweist.

4. Bauteilverbund nach einem der vorhergehenden Ansprüche,
**dadurch gekennzeichnet, dass**
eine Stirnseite (62) des freien Endbereichs (32) bezogen auf die Anlagefläche (36) geneigt ausgebildet ist, wobei ein innerer Rand der Stirnseite (62) der Anlagefläche (36) näher ist als ein äußerer Rand der Stirnseite (62).

5. Bauteilverbund nach einem der vorhergehenden Ansprüche,
**dadurch gekennzeichnet, dass**
das Verbindungselement (22) in dem nicht deformierten Zustand in dem freien Endbereich (32) eine Einbuchtung (64) aufweist, welche in Umfangsrichtung von einer Wandung des Verbindungselements (22) begrenzt ist.

6. Bauteilverbund nach einem der vorhergehenden Ansprüche, wobei das Haltebauteil (12) zumindest im Bereich der Vertiefung (14) aus einem weicheren Material gebildet ist als das wenigstens eine Funktionsbauteil (10).

7. Bauteilverbund nach einem der vorhergehenden Ansprüche,
**dadurch gekennzeichnet, dass**
das Haltebauteil (12) als Druckgussbauteil, insbesondere als aus einer Aluminiumlegierung gebildetes Druckgussbauteil, ausgebildet ist und/oder die wenigstens eine Vertiefung (14) die Form eines sich entgegen der Einpressrichtung (18) verbreiternden Kegelstumpfs aufweist.

8. Bauteilverbund nach einem der vorhergehenden Ansprüche,
**dadurch gekennzeichnet, dass**
in dem deformierten Zustand des Verbindungselements (22) zwischen einer Außenseite (46) des Verbindungselements (22) und einer die Vertiefung (14) des Haltebauteils (12) in Umfangsrichtung begrenzenden Wandung (16) des Haltebauteils (12) ein Zwischenraum (44) ausgebildet ist.

9. Verfahren zum Festlegen eines Funktionsbauteils (10), insbesondere für ein Kraftfahrzeug, an einem Haltebauteil (12) durch Einpressen eines Verbindungselements (22) des Funktionsbauteils (10) in eine in dem Haltebauteil (12) vorgesehene und nach Art eines Sacklochs ausgebildete Vertiefung (14), wobei das Verbindungselement (22) in einem nicht deformierten Zustand in eine Einpressrichtung (18) von einem Grundkörper (24) des Funktionsbauteils (10) absteht, wobei das Verbindungselement (22) durch Aufbringen einer in die Einpressrichtung (18) auf den Grundkörper (24) wirkenden Kraft (28) in einen deformierten Zustand überführt wird, in welchem das Verbindungselement (22) in einem freien Endbereich (32) aufgeweitet ist, wobei der freie Endbereich (32) des Verbindungselements (22) in eine die Vertiefung (14) des Haltebauteils (12) in Umfangsrichtung begrenzende Wandung (16) des Haltebauteils (12) eingebracht wird, wobei
der Grundkörper (24) des Funktionsbauteils (10) eine um das Verbindungselement (22) umlaufende Anlagefläche (36) aufweist, welche zum Herbeiführen eines Koppelzustands des Funktionsbauteils (10), in welchem das Funktionsbauteil (10) durch das Einpressen des Verbindungselements (22) in die Vertiefung (14) an dem Haltebauteil (12) festgelegt ist, in Anlage mit einer Auflagefläche (38) des Haltebauteils (12) gebracht wird, wobei durch einen der Anlagefläche (36) abgewandten Teilbereich des Grundkörpers (24) ein Funktionsmodul (48) des Funktionsbauteils (10) bereitgestellt wird.

10. Verfahren nach Anspruch 9,
**dadurch gekennzeichnet, dass**
eine Länge des Verbindungselements (22) in der Einpressrichtung (18) durch das Überführen des Verbindungselements (22) in den deformierten Zustand auf eine Länge verringert wird, welche einer Tiefe der Vertiefung (14) entspricht.

## Claims

1. Component assembly having at least one functional component, in particular for a motor vehicle, and having a holding component (12), wherein the functional component (10) is secured to the holding component (12) by pressing a connection element (22) of the functional component (10) into a depression (14) provided in the holding component (12) and formed in the manner of a blind hole, wherein the connection element (22), in a non-deformed state, protrudes in a press-in direction (18) from a main body (24) of the functional component (10) and is designed to be converted into a deformed state when a force (28) acting in the press-in direction (18) is applied to the main body (24), in which deformed state the connection element (22) is expanded in a free end region (32) and the free end region (32) of the connection element (22) is introduced into a wall (16) of the holding component (12) which bounds the depression (14) of the holding component (12) in the circumferential direction,
wherein the main body (24) of the functional component (10) has a contact surface (36) which encircles the connection element (22) and which lies against a bearing surface (38) of the holding component (12) when the functional component (10) is in a coupled state in which the functional component (10) is secured to the holding component (12) by the connection element (22) being pressed into the depression (14), wherein a functional module (48) of the functional component (10) is provided by a sub-region of the main body (24) facing away from the contact surface (36).

2. Component assembly according to claim 1,
**characterised in that**
the functional module (18), which is designed in particular for securing a further component to the functional component (10), is designed
- to produce a welded joint between the functional component (10) and a further component, and/or
- comprises a pin-shaped extension (56) which is aligned with the connection element (22), wherein the contact surface (36) is formed on a side, facing away from the pin-shaped extension (56), of a collar-like web (26) of the functional component (10), which web encircles the pin-shaped extension (56).

3. Component assembly according to claim 2,
**characterised in that**
the pin-shaped extension (56)
- has an end region (52) which is widened relative to a shaft region (54) of the pin-shaped extension (56), and/or
- has an outer thread which is formed, in particular, as a coarse thread (58) or as a metric thread (60).

4. Component assembly according to any one of the preceding claims,
**characterised in that**
an end face (62) of the free end region (32) is inclined with respect to the contact surface (36), wherein an inner edge of the end face (62) is closer to the contact surface (36) than an outer edge of the end face (62).

5. Component assembly according to any one of the preceding claims,
**characterised in that**
the connection element (22), in the non-deformed state, has in the free end region (32) an indentation (64) which is bounded in the circumferential direction by a wall of the connection element (22).

6. Component assembly according to any one of the preceding claims, wherein the holding component (12) is formed, at least in the region of the depression (14), from a softer material than the at least one functional component (10).

7. Component assembly according to any one of the preceding claims,
**characterised in that**
the holding component (12) is formed as a die-cast component, in particular as a die-cast component formed from an aluminium alloy, and/or the at least one depression (14) has the shape of a truncated cone which widens counter to the press-in direction (18).

8. Component assembly according to any one of the preceding claims,
**characterised in that**
when the connection element (22) is in the deformed state, an intermediate space (44) is formed between an outer side (46) of the connection element (22) and a wall (16) of the holding component (12) which bounds the depression (14) of the holding component (12) in the circumferential direction.

9. Method for securing a functional component (10), in particular for a motor vehicle, to a holding component (12) by pressing a connection element (22) of the functional component (10) into a depression (14) provided in the holding component (12) and formed in the manner of a blind hole, wherein the connection element (22), in a non-deformed state, protrudes in a press-in direction (18) from a main body (24) of the functional component (10), wherein the connection element (22) is converted into a deformed state when a force (28) acting in the press-in direction (18) is applied to the main body (24), in which deformed state the connection element (22) is expanded in a free end region (32), wherein the free end region (32) of the connection element (22) is introduced into a wall (16) of the holding component (12) which bounds the depression (14) of the holding component (12) in the circumferential direction,
wherein the main body (24) of the functional component (10) has a contact surface (36) which encircles the connection element (22) and which, to bring about a coupled state of the functional component (10), in which state the functional component (10) is secured to the holding component (12) by pressing connection element (22) into the depression (14), is brought into contact with a bearing surface (38) of the holding component (12), wherein a functional module (48) of the functional component (10) is provided by a sub-region of the main body (24) facing away from the contact surface (36).

10. Method according to claim 9,
**characterised in that**
a length of the connection element (22) in the press-in direction (18) is reduced to a length corresponding to a depth of the depression (14) by converting the connection element (22) to the deformed state.

## Revendications

1. Ensemble de composants avec au moins un composant fonctionnel, en particulier pour un véhicule automobile, et avec un composant de retenue (12), dans lequel le composant fonctionnel (10) est fixé au composant de retenue (12) par pressage d'un élément de raccordement (22) du composant fonctionnel (10) dans un évidement (14) prévu dans le composant de retenue (12) et conçu à la manière d'un trou borgne, dans lequel l'élément de raccordement (22) fait saillie dans un état non déformé dans une direction de pressage (18) d'un corps de base (24) du composant fonctionnel (10) et est conçu pour être transféré dans un état déformé en appliquant une force (28) agissant dans la direction de pressage (18) sur le corps de base (24), dans lequel l'élément de raccordement (22) est élargi dans une zone d'extrémité (32) libre et la zone d'extrémité (32) libre de l'élément de raccordement (22) est introduite dans une paroi (16) du composant de retenue (12) délimitant dans la direction périphérique l'évidement (14) du composant de retenue (12),
dans lequel le corps de base (24) du composant fonctionnel (10) présente une surface d'appui (36) qui entoure l'élément de raccordement (22) et qui repose dans un état de couplage du composant fonctionnel (10), dans lequel le composant fonctionnel (10) est fixé par le pressage de l'élément de raccordement (22) dans l'évidement (14) au niveau du composant de retenue (12), sur une surface d'appui (36) du composant de retenue (12), dans lequel un module fonctionnel (48) du composant fonctionnel (10) est fourni par une zone partielle du corps de base (24) opposée à la surface d'appui (36).

2. Ensemble de composants selon la revendication 1,
**caractérisé en ce que**
le module fonctionnel (18), conçu en particulier pour fixer un autre composant au composant fonctionnel (10),
- est conçu pour réaliser un raccordement soudé du composant fonctionnel (10) avec un autre composant et/ou
- comprend une saillie en forme de tige (56), qui est alignée avec l'élément de raccordement (22), dans lequel la surface d'appui (36) est conçue au niveau d'un côté opposé à la saillie en forme de tige (56) d'une nervure en forme de collet (26) du composant fonctionnel (10), qui tourne autour de la saillie en forme de tige (56).

3. Ensemble de composants selon la revendication 2,
**caractérisé en ce que**
la saille en forme de tige (56)
- présente une zone d'extrémité (52), qui est élargie par rapport à une zone de tige (54) de la saillie en forme de tige (56), et/ou
- présente un filetage extérieur, conçu en particulier comme filetage grossier (58) ou comme filetage métrique (60).

4. Ensemble de composants selon l'une quelconque des revendications précédentes,
**caractérisé en ce que**
une face frontale (62) de la zone d'extrémité (32) libre est conçue de manière inclinée par rapport à la surface d'appui (36), dans lequel un bord intérieur de la face frontale (62) de la surface d'appui (36) est plus proche qu'un bord extérieur de la face frontale (62).

5. Ensemble de composants selon l'une quelconque des revendications précédentes,
**caractérisé en ce que**
l'élément de raccordement (22) à l'état non déformé présente dans la zone d'extrémité (32) libre un creux (64) qui est délimité dans la direction circonférentielle par une paroi de l'élément de raccordement (22).

6. Ensemble de composants selon l'une quelconque des revendications précédentes, dans lequel le composant de retenue (12) est formé au moins dans la zone de l'évidement (14) à partir d'un matériau plus souple que l'au moins un composant fonctionnel (10).

7. Ensemble de composants selon l'une quelconque des revendications précédentes,
**caractérisé en ce que**
le composant de retenue (12) est conçu comme une pièce coulée sous pression, en particulier comme une pièce coulée sous pression formée à partir d'un alliage d'aluminium, et/ou l'au moins un évidement (14) présente la forme d'un cône tronqué qui s'élargit à l'encontre de la direction de pressage (18).

8. Ensemble de composants selon l'une quelconque des revendications précédentes,
**caractérisé en ce que**
un espace intermédiaire (44) est conçu à l'état déformé de l'élément de raccordement (22) entre une face extérieure (46) de l'élément de raccordement (22) et une paroi (16) du composant de retenue (12) délimitant l'évidement (14) du composant de retenue (12) dans la direction circonférentielle.

9. Procédé de fixation d'un composant fonctionnel (10), en particulier pour un véhicule automobile, au niveau d'un composant de retenue (12) par pressage d'un élément de raccordement (22) du composant fonctionnel (10) dans un évidement (14) prévu dans le composant de retenue (12) et conçu à la manière d'un trou borgne, dans lequel l'élément de raccordement (22) fait saillie dans un état non déformé dans une direction de pressage (18) d'un corps de base (24) du composant fonctionnel (10), dans lequel l'élément de raccordement (22) est transféré dans un état déformé en appliquant une force (28) agissant dans la direction de pressage (18) sur le corps de base (24), dans lequel l'élément de raccordement (22) est élargi dans une zone d'extrémité (32) libre, dans lequel la zone d'extrémité (32) libre de l'élément de raccordement (22) est introduite dans une paroi (16) du composant de retenue (12) délimitant l'évidement (14) du composant de retenue (12) dans la direction périphérique,
dans lequel le corps de base (24) du composant fonctionnel (10) présente une surface d'appui (36) entourant l'élément de raccordement (22) et qui, pour induire un état de couplage du composant fonctionnel (10), dans lequel le composant fonctionnel (10) est fixé par le pressage de l'élément de raccordement (22) dans l'évidement (14) au niveau du composant de retenue (12), est amené en appui avec une surface d'appui (38) du composant de retenue (12), dans lequel un module fonctionnel (48) du composant fonctionnel (10) est fourni par une zone partielle du corps de base (24) opposée à la surface d'appui (36).

10. Procédé selon la revendication 9,
**caractérisé en ce que**
une longueur de l'élément de raccordement (22) est réduite dans la direction de pressage (18) par le transfert de l'élément de raccordement (22) à l'état déformé sur une longueur, qui correspond à une profondeur de l'évidement (14).
